# FASCICULE DE BREVET EUROPEEN

(11) **EP 1 630 533 B1**
(45) Date de publication et mention de la délivrance du brevet: **05.10.2011**
(21) Numéro de dépôt: 05300654.0
(22) Date de dépôt: 04.08.2005
(51) Int. Cl.: G01K 17/10, G01K 7/20

(54) **Dispositif de mesure de température dans un compteur d'énergie thermique**
Temperaturmessvorrichtung in einem thermischen Energiezähler
Temperature measurement device in a thermal energy meter

(30) Priorité: 27.08.2004 FR 0451917
(43) Date de publication de la demande: 01.03.2006
(73) Titulaire: Actaris SAS, 92100 Boulogne Billancourt (FR)
(72) Inventeur: Bulteau, Serge, 69840, Julienas (FR); Tchervinka, Peter, 71000, Macon (FR)
(74) Mandataire: Lenne, Laurence

(56) Documents cités:
- DE-A- 3 330 915
- DE-A1- 2 711 437
- FR-A- 2 130 978
- GB-A- 2 082 780
- GETZ R: "SINGLE-SLOPE A-D CONVERSION FOR HIGH-RESOLUTION MEASUREMENTS" COMPUTER DESIGN, PENNWELL PUBL. LITTLETON, MASSACHUSETTS, US, vol. 34, no. 11, 1 novembre 1995 (1995-11-01), pages 112-114, XP000546714 ISSN: 0010-4566

## Description

La présente invention se rapporte au domaine des compteurs d'énergie thermique.

De tels compteurs peuvent être utilisés pour mesurer l'énergie thermique consommée par un réseau de chauffage, par exemple une habitation, un immeuble ou encore un quartier. L'énergie thermique est générée par un fournisseur d'énergie thermique, par exemple une chaudière ou une centrale de chauffe. Les compteurs d'énergie thermique peuvent également être utilisés pour mesurer l'énergie générée par un fournisseur d'énergie thermique donné.

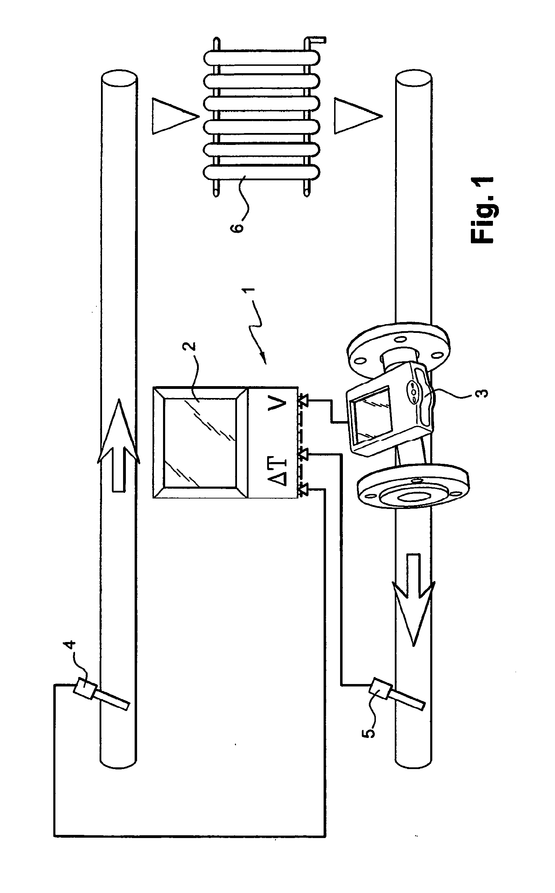

La figure 1 illustre schématiquement le fonctionnement d'un compteur d'énergie thermique selon l'art antérieur. Le compteur d'énergie thermique 1 comprend en général une première sonde de température 4 située à une entrée d'un réseau de chauffage, symbolisé sur la figure 1 par un radiateur 6, et une seconde sonde de température 5 située à une sortie du réseau de chauffage. La première sonde de température 4 et la seconde sonde de température 5 permettent de mesurer respectivement une première température et une seconde température. Des moyens de traitement 2 du compteur d'énergie thermique 1 permettent d'évaluer l'énergie thermique consommée par le réseau de chauffage à partir d'une différence ΔT entre la première température et la seconde température et à partir d'un volume d'eau chaude V. Le volume d'eau chaude V est mesuré à l'aide d'un débitmètre 3.

Chaque sonde de température comprend classiquement un capteur de température. Le capteur de température peut par exemple être résistif ou bien encore à semi-conducteur. Le capteur de mesure comprend un composant de mesure, par exemple une résistance de mesure, dont la valeur est directement fonction de la température au voisinage de celui-ci. La mesure de la température est ainsi ramenée à une mesure de la valeur du composant de mesure.

Les compteurs d'énergie thermique comprennent ainsi un dispositif de mesure de température comprenant classiquement une première résistance de mesure et une seconde résistance de mesure. Une résistance de référence, dont la valeur est connue avec précision, peut également être utilisée, de manière à permettre un calibrage de la mesure effectuée.

Pour un courant donné, la valeur de chaque résistance est sensiblement proportionnelle à la valeur de la tension aux bornes de la résistance. Les mesures de température peuvent ainsi être ramenées à des mesures de tensions. Un exemple est donné par exemple dans le brevet FR 2.130.978.

Les compteurs d'énergie thermique requièrent une précision relativement élevée quant à la valeur de la différence entre la première température et la seconde température, typiquement de l'ordre du centième de degré, ce qui revient à une précision sur les valeurs des résistances de l'ordre du millième d'ohm. Pour un courant de l'ordre du milliampère, les tensions aux bornes des résistances doivent être mesurées avec une précision de l'ordre du microvolt.

Un circuit intégrateur double-rampe peut par exemple être utilisé. Pour chaque tension à mesurer, une capacité est chargée pendant un temps prédéterminé avec cette tension. Lorsque le temps prédéterminé est écoulé, la capacité ainsi chargée est connectée à une résistance de décharge et à un dispositif comparateur. Le dispositif comparateur permet de déterminer le temps nécessaire pour que la tension aux bornes de la capacité passe en dessous d'un certain seuil. Ce temps nécessaire permet de calculer la tension à mesurer, et donc indirectement la valeur de la température.

D'autres circuits peuvent également être utilisés. Un exemple est donné dans l'article intitulé "Single-slope A-D Conversion for high-resolution measurements" Computer Design, Pennwell Publ. Littleton, Massachusetts, US, vol. 34, n° 11, 1 november 1995, pages 112-114 Toutefois, les circuits et méthodes de mesure des tensions selon l'art antérieur restent relativement complexes. Par exemple, la solution proposée dans la demande DE 3330915 A1 fait appel à deux résistances de référence.

La présente invention a pour objet de simplifier les mesures de température dans un compteur d'énergie thermique comme défini dans la revendication 1.

La présente invention a pour objet un dispositif de mesure de température destiné à un compteur d'énergie thermique. Le dispositif de mesure comprend une pluralité de composants comprenant au moins un premier composant de mesure, un second composant de mesure distinct du premier composant de mesure et un composant de référence. La valeur du premier composant de mesure varie selon la température d'un premier milieu, et la valeur du second composant de mesure varie selon la température d'un second milieu. Le composant de référence a une valeur prédéterminée. Le dispositif de mesure de température comprend par ailleurs un dispositif générateur de courant comprenant au moins un générateur de courant. Le dispositif générateur de courant permet d'alimenter les composants de la pluralité de composants. Le dispositif de mesure de température comprend également un dispositif comparateur, comprenant une première entrée, une seconde entrée et une sortie. La valeur du potentiel électrique de la sortie dépend sensiblement du signe d'une différence entre le potentiel électrique de la première entrée et le potentiel électrique de la seconde entrée. Le dispositif de mesure de température comprend également un générateur de rampe en tension relié à la seconde entrée du dispositif comparateur, et permettant de générer une rampe de mesure en tension. Un dispositif multiplexeur permet de relier individuellement à la première entrée du dispositif comparateur des points de mesure d'un jeu de points de mesure. Le jeu de points de mesure comprend au moins une borne du premier composant de mesure, au moins une borne du second composant de mesure et au moins une borne du composant de référence. Un dispositif de comptage relié à la sortie du dispositif comparateur permet de compter des temps correspondants aux potentiels électriques des points de mesure. Des moyens de calcul permettant de déterminer une valeur d'une première température et une valeur d'une seconde température à partir au moins des temps comptés.

Les tensions aux bornes des composants sont ainsi mesurées avec un circuit convertisseur ne comprenant pas d'étage intégrateur, contrairement au circuit double rampe de l'art antérieur.

Les potentiels électriques à mesurer sont ainsi reliés à la première entrée du dispositif comparateur, afin d'être comparés au potentiel électrique de la rampe de mesure en tension. Le dispositif compteur permet d'associer un temps à chaque point de mesure du jeu de points de mesure.

### Jeu de points de mesure

Le jeu de points de mesure peut avantageusement comprendre deux points de mesure pour chaque composant de la pluralité de composants. Dans le cas où la pluralité de composants comprend strictement le premier composant de mesure, le second composant de mesure et le composant de référence, le jeu de points de mesure comprend alors six points de mesure.

La tension aux bornes de chaque composant de la pluralité de composants est déterminée à partir des temps correspondant aux points de mesure associés au composant. Par exemple, la tension aux bornes du premier composant de mesure est déterminée à partir d'un premier temps correspondant au potentiel d'une première borne du premier composant de mesure et à partir d'un second temps correspondant au potentiel d'une seconde borne du premier composant de mesure. Classiquement, les moyens de calculs permettent d'effectuer une différence entre le premier temps et le second temps, et de répéter cette opération de soustraction pour chaque composant de la pluralité de composants. L'opération de soustraction permet d'éliminer l'erreur due à un décalage ou offset en anglais du dispositif comparateur.

Alternativement, le jeu de points de mesure peut ne comprendre, pour chaque composant d'au moins une partie de la pluralité de composants, qu'un seul point de mesure. Les composants de la pluralité de composants peuvent en effet être reliés entre eux par un fil relativement court présentant par conséquent une résistance de fil relativement faible, de sorte que des bornes de deux composants peuvent être équipotentielles et qu'une seule mesure du potentiel électrique peut être réalisée. De plus, les composants de la pluralité de composants peuvent également avoir une borne à une masse du dispositif de mesure, la masse du dispositif de mesure étant reliée à une masse du générateur de rampe, de telle sorte qu'il n'est pas besoin de mesurer les potentiels aux deux bornes des composants reliées à la masse du dispositif de mesure.

Les points de mesure du jeu de points de mesure peuvent également être confondus. Par exemple, le premier composant de mesure, le second composant de mesure et le composant de référence peuvent être disposés en parallèle sur trois branches distinctes, les trois branches étant reliées d'une part à la masse et de l'autre à un noeud faisant office de point de mesure unique.

Toutefois, la pluralité de composants comprend avantageusement au moins un composant intermédiaire, par exemple une résistance intermédiaire, branché en série avec d'autres composants de la pluralité de composants. La résistance intermédiaire peut permettre d'assurer une différence de potentiel entre deux points de mesure du jeu de points de mesure suffisamment élevée pour que le dispositif multiplexeur ait le temps d'assurer une déconnexion d'un point de mesure et une connexion à l'autre point de mesure, avant que le potentiel électrique de la rampe de mesure en tension ne dépasse le potentiel électrique de cet autre point de mesure.

La résistance intermédiaire peut également être située entre un composant de la pluralité de composants et la masse, de façon à permettre de mesurer les potentiels électriques aux deux bornes du composant sans que les mesures soient affectées par des effets transitoires du démarrage de la rampe de mesure en tension.

La présente invention n'est bien entendu pas limitée par la présence de composants intermédiaires.

### Composants de mesure et de référence

Le premier composant de mesure comprend avantageusement une première résistance de mesure. Le second composant de mesure comprend avantageusement une seconde résistance de mesure. Le composant de référence comprend avantageusement une résistance de référence.

La pluralité de composants peut comprendre seulement une pluralité de résistances ou bien un mélange de composants de nature différente.

La présente invention n'est toutefois pas limitée par la nature de chaque composant de la pluralité de composants. Le premier composant de mesure peut par exemple comprendre un premier capteur de température semi-conducteur et le second composant de mesure comprendre un second capteur de température semi-conducteur.

### Branchements des résistances de la pluralité de résistances

La première résistance de mesure, la seconde résistance de mesure et la résistance de référence peuvent être disposées en parallèle sur trois branches distinctes les unes des autres.

Lorsque ce premier mode de branchement est adopté, un procédé de mesure d'une température parmi la première température et la seconde température peut comprendre simplement une étape de mesure relative. L'étape de mesure relative comprend une mesure de la valeur de la résistance de mesure associée à la température à mesurer.

Une étape de calibrage réalisée au préalable comprend une mesure de la valeur de la résistance de référence.

Lors de l'étape de calibrage, les potentiels aux bornes de la résistance de référence sont comparés au potentiel d'une même rampe de mesure en tension et les deux temps ainsi comptés sont soustraits, permettant par-là d'associer une différence de temps à la valeur prédéterminée de la résistance de référence.

De façon similaire, pour chaque résistance de mesure, les potentiels aux bornes de la résistance de mesure sont comparés au potentiel d'une même rampe de mesure en tension et les deux temps ainsi comptés sont soustraits, permettant par-là d'associer une différence de temps à la valeur de la résistance de mesure.

L'étape de calibrage peut, lorsque ce premier mode de branchement est adopté, n'être réalisée qu'une seule fois, ou bien à des intervalles de temps relativement espacés. Chaque étape de mesure relative est en revanche effectuée chaque fois que la valeur de la température correspondante est réactualisée. Le branchement des résistances en parallèle permet ainsi d'éviter une mesure de la tension aux bornes de la résistance de référence à chaque réactualisation des valeurs de la première température et/ou de la seconde température. La valeur de la tension aux bornes de la résistance de référence mesurée lors de l'étape de calibrage est utilisée à chaque actualisation dans le calcul des températures.

Le dispositif générateur de courant peut comprendre un seul générateur et des moyens de multiplexage, afin d'assurer une alimentation en courant de chaque branche une à une, ou bien plusieurs générateurs de courant, chaque générateur de courant permettant d'alimenter une seule branche. Le dispositif générateur doit être choisi soigneusement, afin d'assurer que la valeur du courant traversant chaque branche reste sensiblement la même d'une branche à l'autre et au cours du temps.

Alternativement, la première résistance de mesure, la seconde résistance de mesure et la résistance de référence sont branchées en série, sur une seule branche.

Le dispositif générateur de courant peut alors comprendre un seul générateur de courant : les valeurs de la première résistance de mesure, de la seconde résistance de mesure et de la résistance de référence sont mesurées à partir d'une même rampe de mesure en tension. Pour chaque actualisation des valeurs des températures, trois étapes de mesure sont effectuées. En particulier, la tension aux bornes de la résistance de référence est mesurée à chaque actualisation et la valeur mesurée est bien entendu intégrée au calcul des températures.

La première résistance de mesure, la seconde résistance de mesure et la résistance de référence sont avantageusement disposées sur une première branche et une seconde branche. La première branche comprend avantageusement la résistance de référence et la première résistance de mesure. Avantageusement la seconde branche comprend également la résistance de référence, ainsi que la seconde résistance de mesure.

Lorsqu'un tel second mode de branchement est mis en oeuvre, le procédé de mesure d'une température, par exemple la première température, comprend une étape de calibrage et une étape de mesure relative : la mesure est effectuée à partir d'une seule branche et d'une seule rampe. Les potentiels électriques de points de mesures situés sur la branche sont comparés au potentiel de la rampe.

Un même courant traverse la résistance de référence et la première résistance de mesure puisque la résistance de référence et la première résistance de mesure sont situées sur la même branche. Le dispositif générateur de courant peut alors comprendre deux générateurs de courant permettant de délivrer des courants ayant des valeurs éventuellement distinctes, puisque la tension aux bornes de la résistance de référence peut être mesurée à chaque actualisation de chaque température.

De manière générale, la présente invention n'est pas limitée par la mise en oeuvre du dispositif générateur de courant.

La présente invention n'est pas non plus limitée par le nombre de composants de la pluralité de composants, qu'il s'agisse de composants intermédiaires, de composants de mesure, ou encore de composants de référence.

La pluralité de composants peut par exemple comprendre une première résistance de mesure, une seconde résistance de mesure et deux résistances de référence dont les valeurs sont connues avec précision.

La pluralité de composants peut également comprendre des composants de mesures supplémentaires, afin de mesurer des températures dans des milieux supplémentaires ou bien d'effectuer plusieurs mesures de la température d'un même milieu pour une précision plus élevée.

Les composants de la pluralité de composants peuvent être branchés en série ou en parallèle les uns par rapport aux autres : de façon générale, la présente invention n'est pas limitée par les branchements des composants de la pluralité de composants.

Les composants de la pluralité de composants peuvent être disposés sur m branches, m étant supérieur ou égal à 1, chaque branche i, i allant de 1 à m, comprenant un nombre nᵢ de composants.

### Dispositif comparateur

Le dispositif comparateur comprend avantageusement un amplificateur opérationnel sans contre-réaction : la sortie d'un tel amplificateur opérationnel bascule lorsque le signe de la différence entre le potentiel électrique de la première entrée et du potentiel électrique de la seconde entrée change.

La présente invention n'est toutefois pas limitée par la nature du dispositif comparateur. Le dispositif comparateur pourrait par exemple comprendre un comparateur d'un microprocesseur.

### Générateur de rampe en tension

Le générateur de rampe en tension comprend avantageusement un générateur supplémentaire de courant, un interrupteur de rampe et une capacité de rampe reliée au générateur supplémentaire de courant, l'interrupteur de rampe et la capacité de rampe étant montés en parallèle de façon à permettre de fournir une tension variant sensiblement linéairement avec le temps au moins pendant un laps de temps donné.

Avec une telle rampe linéaire, les temps comptés sont sensiblement proportionnels aux potentiels correspondant : comme les différences de potentiels aux bornes des résistances sont sensiblement proportionnels aux valeurs des résistances, un rapport entre la valeur d'une des résistances de mesure et la valeur prédéterminée de la résistance de référence est sensiblement égal à un rapport des temps ou des différences de temps associés.

Pour ramener le potentiel électrique de la capacité de rampe à un potentiel de référence, par exemple le potentiel de la masse du dispositif de mesure, il suffit de fermer l'interrupteur de rampe.

Alternativement, le générateur de rampe en tension peut comprendre un circuit R-C, de façon à fournir une tension variant avec le temps suivant une loi exponentielle. Dans ce cas, il est préférable de connaître la valeur de la capacité du circuit R-C avec une précision relativement élevée, les temps comptés variant avec les potentiels correspondant suivant une loi non-linéaire.

De manière générale, la présente invention n'est pas limitée par la nature du générateur de rampe en tension.

### Economies d'énergie

La présente invention a également pour objet un procédé de mesure de température mettant en oeuvre le dispositif de mesure de température selon l'invention. Le procédé comprend avantageusement une étape de mesure du potentiel électrique d'au moins un point de mesure situé sur une branche. L'étape de mesure comprend avantageusement :
- une étape de génération d'une rampe de mesure en tension,
- une étape de connexion de la première entrée du dispositif comparateur au point de mesure, et
- une étape de basculement de la sortie du dispositif comparateur, signalant que le potentiel électrique de la rampe de mesure en tension a sensiblement atteint le potentiel électrique du point de mesure.

Selon l'invention, la branche n'est pas alimentée pendant une partie de l'étape de mesure.

Le générateur de courant alimentant la branche est par exemple éteint, ou bien un interrupteur du dispositif générateur est ouvert. De manière générale, l'invention n'est pas limitée par la façon dont le courant traversant la branche est sensiblement annulé.

La branche peut ainsi ne pas être alimentée pendant une partie de la montée de la rampe de mesure en tension, permettant par-là d'économiser de l'énergie.

En effet, dans un compteur d'énergie thermique, le dispositif générateur de courant et le générateur de rampe en tension sont alimentés typiquement par une source non rechargeable, par exemple une pile. Le dispositif générateur de courant produit typiquement un courant de l'ordre de grandeur du milliampère, tandis que le générateur de rampe en tension a une consommation en courant plutôt autour du microampère. L'extinction du générateur de courant permet donc de réaliser des économies substantielles d'énergie, et par conséquent de prolonger la durée de vie de la source non rechargeable.

De telles économies d'énergie par une non-alimentation de la branche comprenant le point de mesure pendant la mesure de température ne sont pas réalisables avec les dispositifs de l'art antérieur comprenant un étage intégrateur.

Toutefois, la présente invention n'est en aucun cas limitée par une éventuelle non-alimentation de la branche comprenant le point de mesure pendant la mesure des tensions.

Lorsque la sortie du dispositif comparateur bascule, signalant que le potentiel électrique de la rampe de mesure en tension a sensiblement atteint le potentiel électrique du point de mesure, la branche du point de mesure doit bien entendue être alimentée. Le moment auquel le générateur de courant est mis sous tension, ou auquel l'interrupteur est fermé, peut être déterminé de multiples manières.

Par exemple, la valeur du potentiel électrique au point de mesure peut être grossièrement connue, de telle sorte la branche est alimentée à un temps prédéterminé.

### Circuit d'économie d'énergie

Alternativement, le dispositif de mesure de température selon l'invention peut comprendre une capacité d'économie d'énergie reliée à la première entrée du dispositif comparateur. Le dispositif multiplexeur permet avantageusement de relier la première entrée du dispositif comparateur également à une résistance de décharge.

Ainsi, l'étape de mesure peut avantageusement comprendre
- une étape de connexion de la première entrée du dispositif comparateur à la résistance de décharge, l'étape de connexion à la résistance de décharge intervenant suite à l'étape de connexion au point de mesure,
- une étape d'interruption du courant traversant la branche suite à l'étape de connexion à la résistance de décharge,
- une étape d'alimentation en courant de la branche suite à un basculement de la sortie du dispositif comparateur, et
- une seconde étape de connexion de la première entrée du dispositif comparateur au point de mesure.

Lorsque la première entrée est connectée à la résistance de décharge, le potentiel électrique de la première entrée est resté sensiblement égal au potentiel électrique du point de mesure, grâce à la capacité d'économie d'énergie. La valeur de la résistance de décharge est telle que la capacité d'économie d'énergie se décharge relativement lentement, de sorte que le potentiel électrique de la première entrée soit, aux échelles de temps de la rampe de mesure en tension, seulement légèrement inférieur au potentiel électrique du second point de mesure.

La capacité d'économie d'énergie permet ainsi de détecter quand le potentiel électrique de la rampe de mesure en tension atteint grossièrement le potentiel électrique du second point de mesure, et donc de déterminer grossièrement un moment adéquat pour alimenter la branche à nouveau.

### Rampes en tensions

Alternativement, le procédé de la présente invention peut comprendre :
- une étape de génération d'une rampe en tension initiale, la rampe en tension initiale étant relativement plus rapide que la rampe de mesure en tension, de façon à déterminer une valeur approximative du temps correspondant au potentiel électrique du point de mesure,
- une étape de génération de la rampe de mesure en tension, de manière à permettre un comptage relativement précis du temps correspondant au potentiel électrique du point de mesure.

La branche est avantageusement alimentée à un temps estimé à partir de la valeur approximative du temps correspondant au potentiel électrique du point de mesure.

Un tel procédé n'exige pas d'implémentation matérielle particulière. Pour chaque branche comprenant au moins un point de mesure, la rampe en tension initiale et la rampe de mesure en tension habituelle sont générées.

### Dispositif multiplexeur

Le dispositif multiplexeur comprend typiquement un multiplexeur, mais la présente invention n'est pas limitée par la nature du dispositif multiplexeur.

### Dispositif de comptage

La présente invention n'est pas limitée par la nature du dispositif de comptage. Le dispositif de comptage peut par exemple comprendre au moins un compteur d'un microcontrôleur ou d'un microprocesseur.

Le dispositif de comptage est relié à la sortie du dispositif comparateur, et éventuellement à des moyens de contrôle, typiquement un microprocesseur.

Le dispositif de comptage permet d'associer un temps au potentiel électrique de chaque point de mesure comparé.

### Moyens de calcul

Les moyens de calculs permettent de déterminer les valeurs des résistances de la pluralité de résistances de mesures, à partir des tensions aux bornes des résistances de la pluralité de résistances, c'est à dire en fait à partir des temps comptés. La valeur de la première température est déterminée à partir du ou des temps associés à la première résistance de mesure et à partir du ou des temps mesurés correspondants à la valeur de la résistance de référence. La seconde température est déterminée à partir du ou des temps associés à la seconde résistance de mesure et à partir du ou des temps associés à la résistance de référence. La résistance de référence permet en fait de calibrer le dispositif de mesure.

La présente invention n'est bien entendu pas limitée par l'implémentation d'un procédé de détermination des valeurs de la première température et de la seconde température à partir des temps comptés. La détermination des valeurs de la première température et de la seconde température peut par exemple être réalisée en très peu d'opérations, en particulier dans le cas d'une rampe de mesure en tension linéaire.

### Compteur d'énergie thermique

La présente invention a également pour objet un compteur d'énergie thermique comprenant un dispositif de mesure de température selon la présente invention. Le premier milieu comprend avantageusement de l'eau en écoulement à l'entrée d'un réseau de chauffage. Le second milieu comprend avantageusement de l'eau en écoulement à la sortie du réseau de chauffage. Le compteur d'énergie thermique comprend avantageusement des moyens de traitement permettant d'évaluer une consommation d'énergie thermique à partir au moins de la première température et de la seconde température.

Alternativement, le premier milieu peut par exemple comprendre de l'eau en écoulement à l'entrée d'un fournisseur d'énergie thermique, et le second milieu comprendre de l'eau en écoulement à la sortie du fournisseur d'énergie thermique.

Un tel compteur d'énergie thermique comprend un circuit convertisseur ne comprenant pas d'étage intégrateur, et est par conséquent plus simple à réaliser que les compteurs d'énergie thermique selon l'art antérieur.

L'invention est décrite ci-après plus en détail à l'aide de figures ne représentant qu'un mode de réalisation préféré de l'invention.

La figure 1, précédemment décrite, illustre schématiquement le fonctionnement d'un compteur d'énergie thermique selon l'art antérieur.

La figure 2 illustre schématiquement un exemple de dispositif de mesure selon un premier mode de réalisation de la présente invention.

La figure 3 illustre schématiquement un exemple de dispositif de mesure selon un second mode de réalisation de la présente invention.

La figure 4 est un graphique représentant un exemple de variations des potentiels électriques à une première entrée et à une seconde entrée d'un dispositif comparateur dans un dispositif de mesure selon le second mode de réalisation de la présente invention.

La figure 5 est un graphique représentant un exemple de variations des potentiels électriques à une première entrée et à une seconde entrée d'un dispositif comparateur dans un dispositif de mesure selon un troisième mode de réalisation de la présente invention.

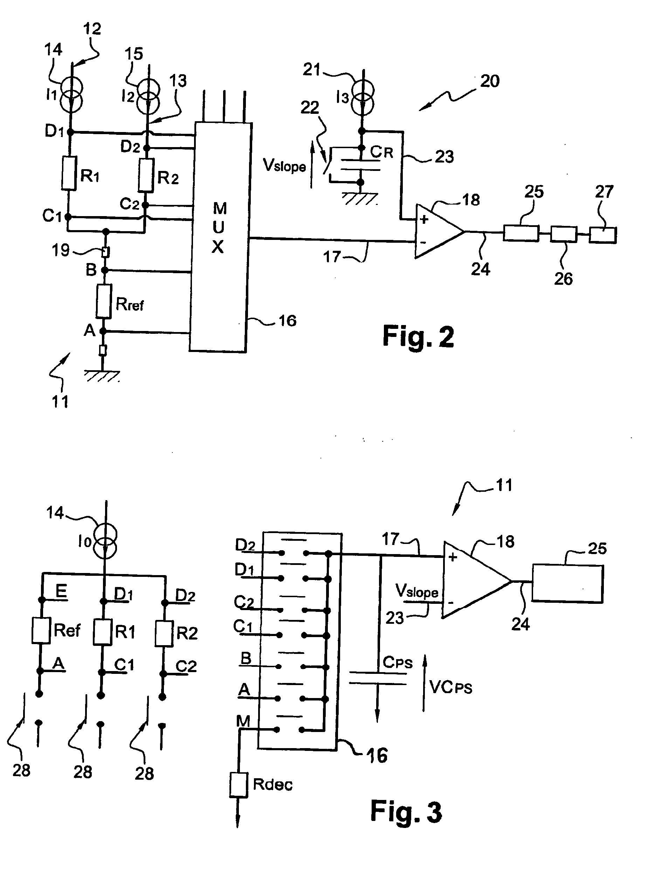

On notera que des éléments ou parties identiques ou similaires ont été désignés par les mêmes signes de référence sur les figures 2 et 3.

### Premier mode de réalisation de l'invention

Selon un premier mode de réalisation de la présente invention, un compteur d'énergie thermique non représenté sur la figure 2 comprend un dispositif de mesure de température 11 comprenant une première résistance de mesure R1 et une seconde résistance de mesure R2.

La valeur de la première résistance de mesure R1 varie avec la température du milieu dans lequel la première résistance de mesure R1 est immergée, c'est à dire d'eau en écoulement à l'entrée d'un réseau de chauffage non représenté, par exemple une habitation, ou bien en sortie d'un fournisseur d'énergie non représenté, par exemple une chaudière.

De façon similaire, la valeur de la seconde résistance de mesure R2 varie avec la température du milieu dans lequel la seconde résistance de mesure R2 est immergée, c'est à dire d'eau en écoulement en sortie du réseau de chauffage, ou bien respectivement à l'entrée du fournisseur d'énergie.

Le dispositif de mesure de température 11 comprend également une résistance de référence Rref permettant un calibrage du dispositif de mesure de température 11.

La première résistance de mesure R1, la seconde résistance de mesure R2 et la résistance de référence Rref sont disposées sur une première branche 12 et une seconde branche 13. La résistance de référence Rref est commune aux deux branches comme représenté sur la figure 2.

Dans le premier mode de réalisation de la présente invention, la première branche 12 est alimentée par un premier générateur de courant 14 et la seconde branche est alimentée par un second générateur de courant 15.

Le dispositif de mesure de température 11 comprend également un dispositif multiplexeur 16. Le dispositif multiplexeur permet de connecter individuellement à une première entrée 17 d'un dispositif comparateur 18 des points de mesures D1, D2, C1, C2, A et B d'un jeu de points de mesures.

Le jeu de points de mesure comprend dans ce premier mode de réalisation :
- un premier point de mesure C1 situé à une première borne de la première résistance de mesure,
- un second point de mesure D1 situé à une seconde borne de la première résistance de mesure,
- un troisième point de mesure C2 situé à une première borne de la seconde résistance de mesure,
- un quatrième point de mesure D2 situé à une seconde borne de la seconde résistance de mesure,
- un cinquième point de mesure A situé à une première borne de la résistance de référence, et
- un sixième point de mesure B situé à une seconde borne de la résistance de référence.

Une première résistance intermédiaire 19 permet d'éviter que le potentiel électrique du sixième point de mesure B soit sensiblement égal ― à la résistance du fil près - au potentiel électrique du premier point de mesure C1 ou du troisième point de mesure C2.

Le dispositif comparateur 18 comprend la première entrée 17 reliée au dispositif multiplexeur 16, ainsi qu'une seconde entrée 23 et une sortie 24.

La seconde entrée est reliée à un générateur de rampe en tension 20. Le générateur de rampe en tension 20 comprend un générateur supplémentaire de courant 21, ainsi qu'un interrupteur de rampe 22 et une capacité de rampe Cr montés en parallèle. Le générateur de rampe en tension 20 permet de générer des rampes en tension de mesure sensiblement linéaires.

Le dispositif comparateur comprend ici un amplificateur opérationnel monté sans contre-réaction, c'est à dire que la sortie 24 du dispositif comparateur bascule entre une première tension de saturation et une seconde tension de saturation lorsque la différence entre le potentiel électrique de la première entrée et du potentiel électrique de la seconde entrée change de signe.

La mesure de chaque température parmi la première température et la seconde température s'effectue en ne mettant sous tension qu'un seul des générateurs de courant parmi le premier générateur de courant 14 et le second générateur de courant 15. Par exemple, pour mesurer la première température, seul le premier générateur de courant est mis sous tension, permettant d'alimenter seulement la première branche 12.

L'interrupteur de rampe 22 du générateur de rampe en tension 20 est fermé, puis ré-ouvert, de façon à générer une rampe de mesure en tension.

Le cinquième point de mesure A est connecté à la première entrée de l'amplificateur opérationnel 18. Une seconde résistance intermédiaire 19 permet d'isoler la résistance de référence Rref d'une masse du dispositif de mesure, permettant par-là à la sortie 24 de l'amplificateur opérationnel 18 de basculer après un temps suffisamment élevé pour éviter des effets transitoires.

Lorsque le potentiel de la seconde entrée 23 de l'amplificateur opérationnel 18, c'est à dire sensiblement le potentiel électrique Vslope de la rampe de mesure en tension, atteint sensiblement le potentiel de la première entrée 17, c'est à dire sensiblement le potentiel électrique du cinquième point de mesure A, la sortie 24 de l'amplificateur opérationnel bascule.

La première entrée 17 de l'amplificateur opérationnel 18 étant une entrée négative, le basculement de la sortie 24 s'effectue en un front montant.

Un dispositif de comptage 25 sensible aux fronts montants de la sortie 24 de l'amplificateur opérationnel 18 associe alors un premier temps au potentiel électrique du cinquième point de mesure A.

Le dispositif multiplexeur 16 permet de déconnecter la première entrée 17 du cinquième point de mesure A. L'entrée 17 de l'amplificateur opérationnel 18 est ensuite connectée au sixième point de mesure B. Le potentiel de la première borne 17 de l'amplificateur opérationnel 18 est alors augmenté, de telle sorte que la sortie 24 de l'amplificateur opérationnel 18 bascule en un front descendant.

Le potentiel électrique de la seconde entrée 23 de l'amplificateur opérationnel croit avec le temps, suivant la rampe de mesure en tension. Quand la sortie 24 de l'amplificateur opérationnel 18 bascule à nouveau en un front montant, le dispositif de comptage associe un second temps au potentiel du sixième point de mesure B.

Des moyens de calcul 26 permettent d'effectuer une différence entre le premier temps et le second temps, cette différence étant proportionnelle à la valeur de la tension aux bornes de la résistance de référence Rref.

De façon similaire, un troisième temps et un quatrième temps sont mesurés, en utilisant la même rampe de mesure en tension. Les moyens de calculs permettent d'effectuer une différence entre le troisième temps et le quatrième temps, cette différence étant proportionnelle à la valeur de la tension aux bornes de la première résistance de mesure R1.

La résistance de référence Rref et la première résistance de mesure R1 étant traversés par un même courant l1, et la valeur de la résistance de référence Rref étant connue, les moyens de calcul 26 permettent aisément de calculer la valeur de la première résistance de mesure R1 et de déterminer la valeur de la première température.

La valeur de la seconde température peut être déterminée de façon similaire, en mettant sous tension cette fois le second générateur de courant 15.

Des moyens de traitement 27 du compteur d'énergie thermique permettent d'évaluer une consommation d'énergie thermique à partir de la première température, de la seconde température et d'un volume d'eau consommé, le volume d'eau étant mesuré par un débitmètre non représenté sur la figure 2.

### Second mode de réalisation de l'invention

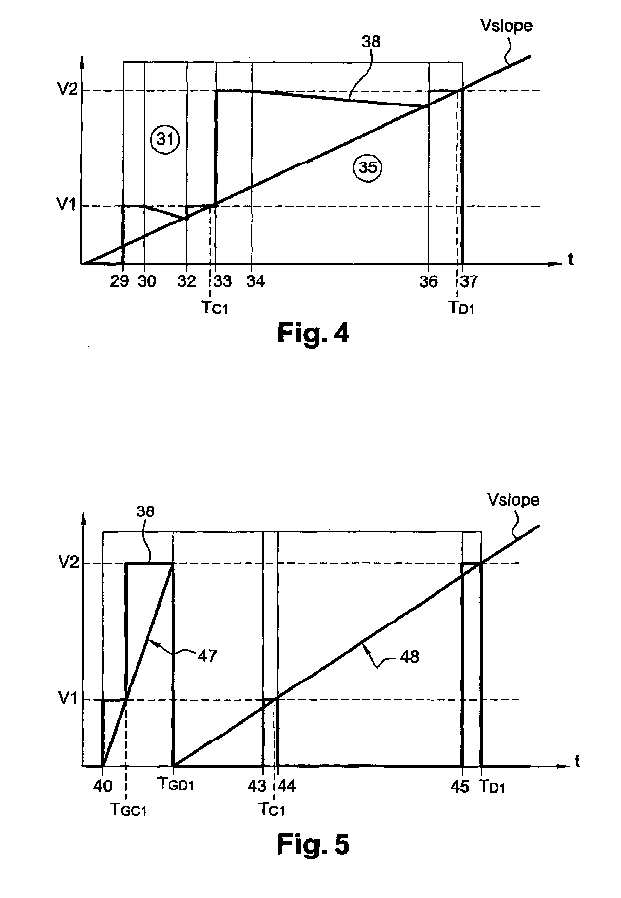

Un second mode de réalisation de la présente invention est illustré par les figures 3 et 4.

Un dispositif de mesure de température 11 destiné à un compteur d'énergie thermique non représenté sur la figure 3 comprend une première résistance de mesure R1, une seconde résistance de mesure R2 et une résistance de référence Rref disposées en parallèle sur trois branches distinctes.

Un dispositif générateur de courant comprend un générateur de courant 14 et trois interrupteurs 28, chaque interrupteur 28 étant disposé une branche déterminée. Le dispositif générateur permet d'alimenter les trois branches une à une, lorsque strictement un des trois interrupteurs 28 est fermé.

Les interrupteurs 28 peuvent être disposés entre les résistances R1, R2, Rref et une masse non représentée, comme illustré sur la figure 3. Alternativement, les interrupteurs peuvent être disposés entre le générateur de courant et les résistances de la pluralité de résistances. De manière générale, il est clair que l'invention n'est limitée par la disposition des interrupteurs sur les branches, du moment que chaque branche peut être individuellement alimentée en courant.

Pour chaque mesure de la valeur d'une résistance parmi les résistances de mesure R1 et R2 et la résistance de référence Rref, une rampe de mesure en tension est générée. La valeur de la résistance de mesure peut ainsi n'être mesurée qu'à intervalles relativement espacés.

Lorsque la valeur d'une résistance parmi les résistances de mesure R1 et R2 et la résistance de référence Rref, par exemple la première résistance de mesure R1, doit être mesurée, chaque borne de la résistance à mesurer est connectée successivement à une première entrée 17 d'un amplificateur opérationnel 18.

Une seconde entrée 23 de l'amplificateur opérationnel 18 est reliée à un générateur de rampe en tension non représenté sur la figure 3. Lorsque le potentiel électrique Vslope de la seconde entrée 23 de l'amplificateur opérationnel 18 atteint sensiblement le potentiel électrique de la première entrée 17, une sortie 24 de l'amplificateur opérationnel bascule.

Un dispositif de comptage permet d'associer un premier temps et un second temps aux bornes de la résistance à mesurer.

Dans le second mode de réalisation de la présente invention, une capacité d'économie d'énergie Cps est reliée à la première entrée 17 de l'amplificateur opérationnel 18.

La figure 4 représente les variations du potentiel électrique Vslope à la seconde entrée 23 de l'amplificateur opérationnel 18 et du potentiel électrique 38 à la première entrée 17 de l'amplificateur opérationnel 18 au cours du temps, lors d'une telle opération de mesure.

Au début de l'opération de mesure, la valeur du potentiel électrique Vslope à la seconde entrée est sensiblement nulle. La première entrée est connectée à un premier point de mesure C1 situé à la première borne de la résistance à mesure, par exemple la première résistance de mesure R1, à un temps 29. La valeur du potentiel électrique 38 de la première entrée de l'amplificateur opérationnel 18 grimpe alors brutalement sensiblement à une valeur V1 du potentiel électrique du premier point de mesure C1.

En particulier, la capacité d'économie d'énergie Cps se charge à la valeur V1 du potentiel électrique du premier point de mesure C1.

Quelques instants plus tard, à un temps 30, la première entrée 17 de l'amplificateur opérationnel 18 est déconnectée du premier point de mesure C1, et est connectée à une résistance de décharge Rdec. Le générateur de courant 14 est ensuite éteint.

La capacité d'économie d'énergie Cps se décharge alors relativement lentement dans la résistance de décharge Rdec, de telle sorte que le potentiel électrique 38 à la première entrée 17 de l'amplificateur opérationnel diminue relativement lentement, lors d'une phase 31 sur la figure 4.

Lorsque, à un temps 32, la sortie 24 de l'amplificateur opérationnel 18 signale que le potentiel électrique 38 de la première entrée 17 est sensiblement égal au potentiel électrique Vslope de la seconde entrée, le générateur de courant 14 est remis sous tension. La première entrée 17 de l'amplificateur opérationnel 18 est déconnectée de la résistance de décharge Rdec et est reconnectée au premier point de mesure C1.

Quelques instants plus tard, lorsque les potentiels électriques 38 et Vslope à la première entrée 18 et à la seconde entrée 23 de l'amplificateur opérationnel 18 redeviennent sensiblement égaux, la sortie 24 de l'amplificateur opérationnel bascule, permettant de déterminer une valeur du premier temps T_{C1} associé au potentiel du premier point de mesure C1.

La première entrée 17 de l'amplificateur opérationnel est alors déconnectée à un temps 33 du premier point de mesure C1, et est connectée à un second point de mesure C2, situé à la seconde borne de la première résistance de mesure R1. Le potentiel électrique 38 grimpe alors à une valeur V2 du potentiel électrique au second point de mesure D1.

Le second temps Tc2 est ensuite déterminé selon un procédé similaire : à un temps 34, le générateur de courant 14 est éteint et la première entrée 17 de l'amplificateur opérationnel 18 est connectée à la résistance de décharge Rdec. Le potentiel électrique 38 décroît relativement lentement lors d'une phase 35, jusqu'à atteindre sensiblement la valeur du potentiel électrique Vslope à la seconde entrée 23 de l'amplificateur opérationnel 18.

Le générateur de courant 14 est alors remis sous tension et la première entrée 17 de l'amplificateur opérationnel 18 est connectée au second point de mesure D1, à un temps 36.

Quelques instants plus tard, sensiblement à un temps 37, lorsque les potentiels électriques 38 et Vslope à la première entrée 18 et à la seconde entrée 23 de l'amplificateur opérationnel 18 redeviennent sensiblement égaux, la sortie 24 de l'amplificateur opérationnel bascule, permettant de déterminer une valeur du second temps T_{D1} associé au potentiel du second point de mesure D1.

Un tel procédé permet de réaliser des économies d'énergie substantielles.

### Troisième mode de réalisation de l'invention

Selon un troisième mode de réalisation, illustré par le graphique de la figure 5, une rampe en tension initiale 47 et une rampe de mesure en tension 48 sont générées pour déterminer des temps associés aux points de mesure d'une même branche. Dans l'exemple illustré figure 5, la branche comprend seulement un premier point de mesure C1 et un second point de mesure D1.

La rampe en tension initiale 47 est relativement plus rapide que la rampe de mesure en tension 48.

Un générateur de courant permettant d'alimenter la branche est d'abord mis sous tension, et une première entrée d'un dispositif comparateur est reliée au premier point de mesure C1 à un temps 40. Le générateur de courant est gardé sous tension jusqu'à ce que le potentiel électrique de la rampe en tension initiale atteigne la valeur du potentiel électrique du dernier point de mesure de la branche, ici le second point de mesure D1.

La rampe en tension initiale 47 permet de déterminer des valeurs approximatives T_{GC1} et T_{GD1} d'un premier temps et d'un second temps, le premier temps et le second temps correspondant aux potentiels électriques du premier point de mesure C1 et du second point de mesure D1. Les valeurs du premier temps et du second temps restent encore à déterminer de façon plus précise.

Le générateur de courant est éteint et la rampe de mesure en tension 48 est alors générée.

Le générateur de courant est remis sous tension, à un temps 43 estimé à partir de la valeur approximative T_{GC1} du premier temps. Si l'estimation est correcte, une sortie du dispositif comparateur signale quelques instants plus tard que le potentiel électrique Vslope de la seconde entrée a atteint sensiblement la valeur du potentiel électrique 38 de la première entrée, permettant par-là de déterminer avec précision la valeur du premier temps T_{C1}. La générateur de courant est ensuite éteint, à un temps 44.

De façon similaire, la première entrée est ensuite connectée au second point de mesure D2. Le générateur de courant est remis sous tension, à un temps 45 estimé à partir de la valeur approximative T_{GD1} du second temps. Si l'estimation est correcte, une sortie du dispositif comparateur signale quelques instants plus tard que le potentiel électrique Vslope de la seconde entrée a atteint sensiblement la valeur du potentiel électrique 38 de la première entrée, permettant par-là de déterminer de façon relativement précise le second temps T_{D1}. Le générateur de courant peut ensuite être éteint.

## Revendications

1. Dispositif de mesure de température (11) destiné à un compteur d'énergie thermique, le dispositif de mesure comprenant :
une pluralité de composants disposés sur une ou plusieurs branches et comprenant au moins
un premier composant de mesure (R1) dont la valeur varie selon la température d'un premier milieu,
un second composant de mesure (R2) distinct du premier composant de mesure, la valeur du second composant de mesure variant selon la température d'un second milieu,
un composant de référence (Rref) ayant une valeur prédéterminée,
un dispositif générateur de courant comprenant au moins un générateur de courant (14), le dispositif générateur de courant permettant d'alimenter en courant la branche ou chaque branche desdites plusieurs branches une à une, et
un dispositif multiplexeur (16),
**caractérisé en ce que** le dispositif de mesure de température comprend par ailleurs
un dispositif comparateur (18), comprenant une première entrée (17) reliée à la sortie du dispositif multiplexeur (16), une seconde entrée (23) et une sortie (24), la valeur du potentiel électrique de la sortie dépendant sensiblement du signe d'une différence entre le potentiel électrique de la première entrée et le potentiel électrique de la seconde entrée,
un générateur de rampe en tension (20) relié à la seconde entrée (23) du dispositif comparateur, et permettant de générer une rampe de mesure en tension,
un dispositif de comptage (25) relié à la sortie (24) du dispositif comparateur (18), et
des moyens de calcul (26),
**en ce que** le dispositif multiplexeur (16) est apte, pendant une étape de mesure réalisée pour ladite branche ou chaque branche desdites plusieurs branches, à relier individuellement et successivement à la première entrée du dispositif comparateur une pluralité de points de mesure correspondant chacun à une borne des composants d'une même branche,
**en ce que** ledit générateur de rampe en tension (20) est apte à générer, pendant ladite étape de mesure, une unique rampe de mesure en tension avec laquelle le dispositif comparateur (18) compare les potentiels électriques de ladite pluralité de points de mesure,
le dispositif de comptage (25) permettant de compter des temps correspondants aux potentiels électriques des points de mesure, et
les moyens de calcul (26) permettant de déterminer la tension aux bornes de chaque composant de la pluralité de composants à partir des temps comptés pour les points de mesure correspondant aux bornes de chaque composant, et par suite une valeur d'une première température et une valeur d'une seconde température.

2. Dispositif de mesure de température (11) selon la revendication 1, dans lequel
le premier composant de mesure comprend une première résistance de mesure (R1),
le second composant de mesure comprend une seconde résistance de mesure (R2), et
le composant de référence comprend une résistance de référence (Rref).

3. Dispositif de mesure de température (11) selon la revendication 2, dans lequel
la première résistance de mesure (R1), la seconde résistance de mesure (R2) et la résistance de référence (Rref) sont disposées sur une première branche (12) et une seconde branche (13), la première branche comprenant la résistance de référence et la première résistance de mesure, la seconde branche comprenant également la résistance de référence, ainsi que la seconde résistance de mesure.

4. Dispositif de mesure de température (11) selon la revendication 2, dans lequel
la première résistance de mesure (R1), la seconde résistance de mesure (R2) et la résistance de référence (Rref) sont disposées en parallèle sur trois branches distinctes les unes des autres.

5. Dispositif de mesure de température selon l'une des revendications précédentes, dans lequel le générateur de rampe en tension (20) comprend
un générateur supplémentaire de courant (21),
un interrupteur de rampe (22), et
une capacité de rampe (Cr) reliée au générateur supplémentaire de courant, l'interrupteur de rampe et la capacité de rampe étant montés en parallèle, de façon à permettre de fournir une tension variant sensiblement linéairement avec le temps au moins pendant un laps de temps donné.

6. Dispositif de mesure de température (11) selon l'une des revendications précédentes comprenant par ailleurs :
une capacité d'économie d'énergie (Cps) reliée à la première entrée (17) du dispositif comparateur (18), et dans lequel
le dispositif multiplexeur (16) permet également de relier la première entrée du dispositif comparateur à une résistance de décharge (Rdec).

7. Procédé mettant en oeuvre le dispositif de mesure de température (11) selon l'une des revendications précédentes, le procédé comprenant une étape de mesure du potentiel électrique de ladite pluralités de points
de mesure situés sur une branche, l'étape de mesure comprenant une étape de génération de ladite unique rampe de mesure en tension, et, pour chaque point de mesure,
une étape de connexion de la première entrée du dispositif comparateur (18) au point de mesure,
une étape de basculement de la sortie du dispositif comparateur, signalant que le potentiel électrique de la rampe de mesure en tension a sensiblement atteint le potentiel électrique du point de mesure,
le procédé étant **caractérisé en ce que**
la branche n'est pas alimentée pendant une partie de l'étape de mesure.

8. Procédé selon la revendication 7, mettant en oeuvre le dispositif de mesure de température (11) selon la revendication 6, l'étape de mesure comprenant
une étape de connexion de la première entrée (17) du dispositif comparateur (18) à la résistance de décharge (Rdec), l'étape de connexion à la résistance de décharge intervenant suite à l'étape de connexion au point de mesure,
une étape d'interruption du courant traversant la branche suite à l'étape de connexion à la résistance de décharge,
une étape d'alimentation en courant de la branche suite à un basculement de la sortie du dispositif comparateur, et
une seconde étape de connexion de la première entrée du dispositif comparateur au point de mesure.

9. Procédé selon la revendication 7, l'étape de mesure comprenant par ailleurs :
une étape de génération d'une rampe en tension initiale (47) relativement plus rapide que la rampe de mesure en tension (48), de façon à déterminer une valeur approximative (T_{GC1}, T_{GD1}) d'un temps correspondant au potentiel électrique du point de mesure,
une étape de génération de la rampe de mesure en tension, de manière à permettre un comptage relativement précis du temps correspondant au potentiel électrique du point de mesure,
et dans lequel :
la branche est alimentée à un temps estimé à partir de la valeur approximative du temps correspondant au potentiel électrique du point de mesure.

10. Compteur d'énergie thermique comprenant
un dispositif de mesure de température (11) selon l'une des revendications 1 à 6, le premier milieu comprenant de l'eau en écoulement à l'entrée d'un réseau de chauffage, le second milieu comprenant de l'eau en écoulement à la sortie du réseau de chauffage, et
des moyens de traitement (27) permettant d'évaluer une consommation d'énergie thermique à partir au moins de la première température et de la seconde température.

## Claims

1. A temperature measuring device (11) intended for a thermal energy counter, the measuring device comprising:
a plurality of components arranged on one or several branches and comprising at least
a first measuring component (R1) whereof the value varies depending on the temperature of a first medium,
a second measuring component (R2) separate from the first measuring component, the value of the second measuring component varying according to the temperature of the second medium,
a reference component (Rref) having a predetermined value,
a current generating device comprising at least one current generator (14), the current generating device making it possible to supply the branch or each branch of said several branches one by one with current, and
a multiplexing device (16),
**characterized in that** the temperature measuring device also comprises a comparing device (18), comprising a first inlet (17) connected to the outlet of the multiplexing device (16), a second inlet (23) and an outlet (24), the value of the electric potential of the outlet depending substantially on the sign of a difference between the electric potential of the first input and the electric potential of the second input,
a voltage ramp generator (20) connected to the second input (23) of the comparing device, and making it possible to generate a voltage measuring ramp,
a counting device (25) connected to the output (24) of the comparing device (18), and
computing means (26),
**in that** the multiplexing device (16) is capable, during a measuring step done for said branch or each branch of said multiple branches to individually and successively connect, to the first input of the comparing device, a plurality of measuring points each corresponding to a terminal of the components of a same branch,
**in that** said voltage ramp generator (20) is capable of generating, during said measuring step, a single voltage measuring ramp with which the comparing device (18) compares the electric potential of said plurality of measuring points,
the counting device (25) making it possible to count times corresponding to the electric potential of the measuring points, and
the computing means (26) making it possible to determine the voltage at the terminals of each component of the plurality of components from the times counted for the measuring points corresponding to the terminals of each component, and subsequently a value of a first temperature and a value of a second temperature.

2. The temperature measuring device (11) according to claim 1, wherein
the first measuring component comprises a measuring resistance (R1),
the second measuring component comprises a second measuring resistance (R2), and the reference component comprises a reference resistance (Rref).

3. The temperature measuring device (11) according to claim 2, wherein
the first measuring resistance (R1), the second measuring resistance (R2) and the reference resistance (Rref) are arranged on a first branch (12) and a second branch (13), the first branch comprising the reference resistance and the first measuring resistance, the second branch also comprising the reference resistance, as well as the second measuring resistance.

4. The temperature measuring device (11) according to claim 2, wherein
the first measuring resistance (R1), the second measuring resistance (R2) and the reference resistance (Rref) are arranged in parallel on three branches separate from each other.

5. The temperature measuring device according to one of the preceding claims, wherein the voltage ramp generator (20) comprises
an additional current generator (21),
a ramp switch (22), and
a ramp capacitor (Cr) connected to the additional current generator, the ramp switch and the ramp capacitor being mounted in parallel, so as to make it possible to provide a voltage varying substantially linearly with time through a given period of time.

6. The temperature measuring device (11) according to one of the preceding claims, also comprising:
an energy saving capacitance (Cps) connected to the first input (17) of the comparing device (18), and in which
the multiplexing device (16) also makes it possible to connect the first input of the comparing device to a discharge resistance (Rdec).

7. A method using the temperature measuring device (11) according to one of the preceding claims, the method comprising
a step for measuring the electric potential of said plurality of measuring points situated on a branch, the measuring step comprising
a step for generating said single voltage measuring ramp, and, for each measuring point,
a step for connecting the first input of the comparing device (18) to the measuring point,
a step for tilting the outlet of the comparing device, signaling that the electric potential of the voltage measuring ramp has substantially reached the electric potential of the measuring point,
the method being **characterized in that**
the branch is not powered during part of the measuring step.

8. The method according to claim 7, using the temperature measuring device (11) according to claim 6, the measuring step comprising:
a step for connecting the first input (17) of the comparing device (18) to the discharge resistance (Rdec), the step for connecting to the discharge resistance taking place following the step for connecting to the measuring point,
a step for interrupting the current passing through the branch following the connecting step to the discharge resistance,
a step for supplying the branch with current following tilting of the output of the comparing device, and
a second step for connecting the first input of the comparing device to the measuring point.

9. The method according to claim 7, the measuring step also comprising:
a step for generating an initial voltage ramp (47) relatively faster than the voltage measuring ramp (48), so as to determine an approximate value (T_{GC1}, T_{GD1}) of a time corresponding to the electric potential of the measuring point,
a step for generating the voltage measuring ramp, so as to allow relatively precise counting of the time corresponding to the electric potential of the measuring point,
and in which:
the branch is powered at a time estimated from the approximate value of the time corresponding to the electric potential of the measuring point.

10. A thermal energy counter comprising
a temperature measuring device (11) according to one of claims 1 to 6, the first medium comprising water flowing from the input of a heating grid, the second medium comprising the water flowing at the output of the heating grid, and
processing means (27) making it possible to evaluate a thermal energy consumption from at least the first temperature and the second temperature.

## Patentansprüche

1. Temperaturmessvorrichtung (11) für einen Wärmeenergiezähler, wobei die Messvorrichtung umfasst:
eine Vielzahl von Komponenten, die auf einem oder mehreren Zweigen angeordnet sind und zumindest umfassen
eine erste Messkomponente (R1), deren Wert gemäß der Temperatur einer ersten Umgebung schwankt,
eine zweite Messkomponente (R2), die sich von der ersten Messkomponente unterscheidet, wobei der Wert der zweiten Messkomponente gemäß der Temperatur einer zweiten Umgebung schwankt,
eine Referenzkomponente (Rref) mit einem vorbestimmten Wert,
eine Stromerzeugungsvorrichtung, die zumindest einen Stromerzeuger (14) umfasst, wobei die Stromerzeugungsvorrichtung erlaubt, den Zweig oder jeden Zweig der mehreren Zweige einzeln mit Strom zu versorgen, und
eine Multiplexvorrichtung (16),
**dadurch gekennzeichnet, dass** die Temperaturmessvorrichtung weiterhin umfasst
eine Vergleichsvorrichtung (18), die einen ersten Eingang (17) umfasst, der mit dem Ausgang der Multiplexvorrichtung (16) verbunden ist, einen zweiten Eingang (23) und einen Ausgang (24), wobei der Wert des elektrischen Potentials des Ausgangs etwa vom Vorzeichen einer Differenz zwischen dem elektrischen Potential des ersten Eingangs und dem elektrischen Potential des zweiten Eingangs abhängt,
einen Spannungsrampengenerator (20), der mit dem zweiten Eingang (23) der Vergleichsvorrichtung verbunden ist und erlaubt, eine Spannungsmessrampe zu erzeugen,
eine Zählvorrichtung (25), die mit dem Ausgang (24) der Vergleichsvorrichtung (18) verbunden ist, und
Rechenmittel (26),
dass die Multiplexvorrichtung (16) imstande ist, während eines für den Zweig oder jeden Zweig der mehreren Zweige durchgeführten Messschritts eine Vielzahl von Messpunkten mit dem ersten Eingang der Vergleichsvorrichtung einzeln und nacheinander zu verbinden, die jeweils einer Klemme der Komponenten eines selben Zweigs entsprechen,
dass der Spannungsrampengenerator (20) imstande ist, während des Messschritts eine einzige Spannungsmessrampe zu generieren, mit der die Vergleichsvorrichtung (18) die elektrischen Potentiale der Vielzahl von Messpunkten vergleicht,
wobei es die Zählvorrichtung (25) erlaubt, die Zeiten, die den elektrischen Potentialen der Messpunkte entsprechen, zu ermitteln, und es die Rechenmittel (26) erlauben, die Spannung an den Klemmen jeder Komponente der Vielzahl von Komponenten ausgehend von den für die Messpunkte, die den Klemmen jeder Komponente entsprechen, ermittelten Zeiten zu bestimmen und in der Folge einen Wert einer ersten Temperatur und einen Wert einer zweiten Temperatur.

2. Temperaturmessvorrichtung (11) nach Anspruch 1, wobei
die erste Messkomponente einen ersten Messwiderstand (R1) umfasst,
die zweite Messkomponente einen zweiten Messwiderstand (R2) umfasst, und die Referenzkomponente einen Referenzwiderstand (Rref) umfasst.

3. Temperaturmessvorrichtung (11) nach Anspruch 2, wobei
der erste Messwiderstand (R1), der zweite Messwiderstand (R2) und der Referenzwiderstand (Rref) auf einem ersten Zweig (12) und einem zweiten Zweig (13) angeordnet sind, wobei der erste Zweig den Referenzwiderstand und den ersten Messwiderstand umfasst, wobei der zweite Zweig ebenfalls den Referenzwiderstand sowie den zweiten Messwiderstand umfasst.

4. Temperaturmessvorrichtung (11) nach Anspruch 2, wobei
der erste Messwiderstand (R1), der zweite Messwiderstand (R2) und der Referenzwiderstand (Rref) parallel auf drei voneinander verschiedenen Zweigen angeordnet sind.

5. Temperaturmessvorrichtung nach einem der vorangehenden Ansprüche, wobei der Spannungsrampengenerator (20) umfasst
einen zusätzlichen Stromerzeuger (21),
einen Rampenunterbrecher (22) und
eine mit dem zusätzlichen Stromerzeuger verbundene Rampenkapazität (Cr), wobei der Rampenunterbrecher und die Rampenkapazität derart parallel montiert sind, dass eine Spannung lieferbar ist, die zumindest während eines bestimmten Zeitraums etwa linear mit der Zeit schwankt.

6. Temperaturmessvorrichtung (11) nach einem der vorangehenden Ansprüche, die weiterhin umfasst:
eine Energiesparkapazität (Cps), die mit dem ersten Eingang (17) der Vergleichsvorrichtung (18) verbunden ist, und wobei
es die Multiplexvorrichtung (16) ebenfalls erlaubt, den ersten Eingang der Vergleichsvorrichtung mit einem Entladewiderstand (Rdec) zu verbinden.

7. Verfahren, das die Temperaturmessvorrichtung (11) nach einem der vorangehenden Ansprüche umsetzt, wobei das Verfahren umfasst
einen Schritt des Messens des elektrischen Potentials der Vielzahl von auf einem Zweig befindlichen Messpunkte, wobei der Messschritt einen Schritt der Erzeugung der einzigen Spannungsmessrampe umfasst und für jeden Messpunkt
einen Schritt des Verbindens des ersten Eingangs der Vergleichsvorrichtung (18) mit dem Messpunkt,
einen Schritt des Umschaltens des Ausgangs der Vergleichsvorrichtung, der anzeigt, dass das elektrische Potential der Spannungsmessrampe etwa das elektrische Potential des Messpunkts erreicht hat,
wobei das Verfahren **dadurch gekennzeichnet ist, dass**
der Zweig während eines Teils des Messschritts nicht versorgt wird.

8. Verfahren nach Anspruch 7, das die Temperaturmessvorrichtung (11) nach Anspruch 6 umsetzt, wobei der Schritt des Messens umfasst
einen Schritt des Verbindens des ersten Eingangs (17) der Vergleichsvorrichtung (18) mit dem Entladewiderstand (Rdec), wobei der Schritt des Verbindens mit dem Entladewiderstand nach dem Schritt des Verbindens mit dem Messpunkt erfolgt,
einen Schritt des Unterbrechens des Stroms, der den Zweig nach dem Schritt des Verbindens mit dem Entladewiderstand durchquert,
einen Schritt des Versorgens mit Strom des Zweigs nach einem Umschalten des Ausgangs der Vergleichsvorrichtung und
einen zweiten Schritt des Verbindens des ersten Eingangs der Vergleichsvorrichtung mit dem Messpunkt.

9. Verfahren nach Anspruch 7, wobei der Schritt des Messens weiterhin umfasst:
einen relativ schnelleren Schritt des Erzeugens einer Anfangsspannungsrampe (47) als die Spannungsmessrampe (48), so dass ein Schätzwert (T_{GC1}, T_{GD1}) einer Zeit bestimmt wird, die dem elektrischen Potential des Messpunkts entspricht,
einen Schritt des Erzeugens der Spannungsmessrampe, so dass eine relativ präzise Ermittlung der Zeit ermöglicht wird, die dem elektrischen Potential des Messpunkts entspricht,
und wobei
der Zweig in einer Zeit versorgt wird, die ausgehend von dem Schätzwert der Zeit, die dem elektrischen Potential des Messpunkts entspricht, ermittelt wird.

10. Wärmeenergiezähler, der umfasst
eine Temperaturmessvorrichtung (11) nach einem der Ansprüche 1 bis 6, wobei die erste Umgebung am Eingang eines Heiznetzes fließendes Wasser umfasst, die zweite Umgebung am Ausgang des Heiznetzes fließendes Wasser umfasst, und
Verarbeitungsmittel (27), die es gestatten, einen Wärmeenergieverbrauch ausgehend von zumindest der erste Temperatur und der zweiten Temperatur zu ermitteln.
